# EUROPÄISCHE PATENTSCHRIFT

(11) **EP 1 911 345 B1**
(45) Veröffentlichungstag und Bekanntmachung des Hinweises auf die Patenterteilung: **08.02.2012**
(21) Anmeldenummer: 07104875.5
(22) Anmeldetag: 26.03.2007
(51) Int. Cl.: A43B 23/14

(54) **Fruchtbehangsregulierung**
Regulation of tree fruit yield
Régulation de la charge en fruit

(30) Priorität: 10.10.2006 DE 102006048152
(43) Veröffentlichungstag der Anmeldung: 16.04.2008
(73) Patentinhaber: Blanke, Michael, 51143 Köln (DE); Damerow, Lutz, 53123 Bonn (DE)
(72) Erfinder: Blanke, Michael, 51143 Köln (DE); Damerow, Lutz, Bonn 53123 (DE)
(74) Vertreter: Benninger, Johannes

(56) Entgegenhaltungen:
- WO-A-98/30078
- DE-A1- 4 103 915
- DE-A1- 19 713 452

## Beschreibung

Die vorliegende Erfindung betrifft eine Vorrichtung und ein Verfahren zur Regulierung des Fruchtbehangs von Fruchtgehölzen, insbesondere von Obstbäumen.

### Stand der Technik

Fruchtbehangsregulierung bei Fruchtgehölzen, insbesondere bei Obstbäumen, durch eine Verringerung der Anzahl von Blüten und/oder Fruchtansätzen ist eine Voraussetzung für die Produktion hochwertiger Früchte in Bezug auf Fruchtgröße, Farbe, Festigkeit und wertbestimmende Inhaltsstoffe sowie zur Brechung der Alternanz (Wechsel von ertragsschwachen und ertragsreichen Jahren).

Bei der chemischen Ausdünnung im Obstbau herrscht ein schneller Wechsel zugelassener Produkte, diese sind oft umweltschädlich und ihre Zulassung ist oft auf nur wenige Monate beschränkt. Im ökologischen Obstbau steht mit Schwefelkalk nur ein wenig wirksames Präparat zur Verfügung. Zudem ist die Anwendung der meisten chemischen Präparate stark temperaturabhängig. Ein Beispiel zur chemischen Ausdünnung von Steinobstblüten mit bestimmten alkoxylierten Aminen und alkoxylierten quartären Ammoniumverbindungen wird in CA 2 045 352 C beschrieben.

Das mechanische Ausdünnen in Handarbeit ist eine schonende, jedoch sehr zeit- und damit kostenaufwändige Methode, Fruchtgehölze auszudünnen. Dies kann mithilfe von speziellen Scheren geschehen, wie sie beispielsweise in KR 10 2001 00 83 978 A beschrieben wird. Das Dokument zeigt einen Apparat zum Ausdünnen überflüssiger Blüten oder Früchte in Form einer Spezialschere.

Weitere Versuche wurden mit physikalischen Methoden unternommen. US 4 819 373 beschreibt das Ausdünnen von Früchten mithilfe von Rotlicht- Behandlungen (far red).

Versuche zur mechanisierten mechanischen Ausdünnung werden seit Anfang / Mitte der neunziger Jahre durchgeführt. Bspw. ist aus der DE 41 03 915 C2 eine Vorrichtung bekannt, die eine senkrecht bzw. gegenüber dem Fruchtträger neigbar stehende Welle aufweist, an der flexible, peitschenartige Schlagelemente aus Kunststoff de Welle aufweist, an der flexible, peitschenartige Schlagelemente aus Kunststoff befestigt sind, die bei entsprechend hoher Drehzahl (Tangentialkraft) horizontal kammartig in die Baumkrone eingreifen und die Blüten- bzw. Fruchtstände abstreifen bzw. abschlagen. Dieses Verfahren bringt einige Nachteile mit sich. Zum einen werden vor allem Früchte an der Gehölzperipherie entfernt, die eigentlich auf Grund ihrer Fruchtqualität erwünscht sind. Durch die von der Seite kommende Schlagbewegung werden zudem meist mehrere Blüten- bzw. Fruchtstände gemeinsam beschädigt oder entfernt. Es erfolgt außerdem allgemein eine starke Beschädigung des Blatt- und Astwerkes. Nicht zuletzt ist die Vorrichtung bzw. das Verfahren nur bei speziellen Baumformen (Superspindeln) möglich und ein zu starker Eingriff kann unkalkulierbaren Fruchtfall zu einem späteren Zeitpunkt zur Folge haben.

Weiterhin zeigt DE 197 13 452 A1 eine Vorrichtung zum Ausdünnen von Obstbäumen, wobei ein drehbarer Körper in einem Rahmen gehaltert ist, der in einer oszillierenden Bewegung angetrieben wird, so dass der drehbare Körper eine Rotationsbewegung und eine gleichmäßige Hin- und Herbewegung ausführt.

JP 13 09 607 A zeigt eine Maschine, die verschiedene Arbeitsschritte, beispielsweise Beschneiden, Ausdünnen, Ernten etc., an Pflanzen durchführen kann. WO 98/30078 beschreibt eine Maschine zur Verwendung im Weinbau, durch die die Weinpflanzen unter anderem auch ausgedünnt werden können.

Wie bereits oben beschrieben kommt es bei mechanischer Ausdünnung häufig zu Verletzungen von ungewollt vielen Blüten- bzw. Fruchtständen und / oder zu einer starken Beschädigung des Blatt- und Astwerkes und zum Entfernen erwünschter Blüten bzw. Früchte in der Baumperipherie. Um diese Nachteile der mechanischen Ausdünnung zu umgehen, wurde nach Alternativen gesucht. Eine Baum schonendere Möglichkeit besteht in der Kombination aus chemischer und mechanischer Behandlung, wie sie beispielsweise in DE 199 32 273 A1 dargestellt ist. Das Dokument beschreibt ein Verfahren zur Fruchtausdünnung bei Obstbäumen, bei dem die Bäume zuerst mit Ethephon vorbehandelt und anschließend mehrfach mechanisch gerüttelt werden.

### Beschreibung

Ein Ziel der Erfindung besteht darin, ein neues Verfahren und eine neue Vorrichtung zur Regulierung des Fruchtbehangs von Fruchtgehölzen zur Verfügung zu stellen, das auf schonende Weise einzelne Blüten von Fruchtgehölzen entfernt. Die Entfernung von Blüten soll unabhängig von der Form des Fruchtträgers und auch an dessen innen liegenden Bereichen erfolgen.

Die erfindungsgemäße Vorrichtung zur Regulierung des Fruchtbehangs von Obstbäume ergibt sich aus den Mermalen des Anspruchs 1.

Die erfindungsgemäße Vorrichtung wird seitlich an ein Fruchtgehölz herangeführt, wobei die Hauptachse weitgehend parallel zu dem Hauptstamm des Fruchtgehölzes ausgerichtet ist. Die Hauptachse ist hierzu vorzugsweise auf einem Gestell montiert, welches zumindest in eine Richtung fahrbar ist, insbesondere indem es an einer landwirtschaftlichen Zugmaschine, beispielsweise einem Traktor, montiert sein kann. Die wenigstens zwei, um jeweils seine Längsachse drehbaren Körper weisen vorzugsweise eine langgestreckte Form auf und können aufgrund ihrer Neigung von der Seite her in das Fruchtgehölz eingreifen. Bei einer Winkelstellung von nahe 0° bis 60° zur Horizontale können sie nahezu horizontal bzw. so flach, wie der Wuchs des Gehölzes es erlaubt, in das Fruchtgehölz eingreifen und mit ihren Endabschnitten bis nahe an den Hauptstamm des Gehölzes herangeführt werden. Die Drehung der Körper um ihre Längsachse führt zu einer weitgehend radial von den drehbaren Körpern abstehenden Ausrichtung der von ihrer Mantelfläche ausgehenden Schlagelemente und zur Ausführung einer Schlagbewegung durch die Schlagelemente. Die weitgehend im rechten Winkel von den drehbaren Körpern abstehenden Schlagelemente greifen dabei in weitgehend vertikaler Richtung in das Fruchtgehölz ein; die Endabschnitte der Schlagelemente streifen Äste und Zweige vorwiegend von oben oder von unten her. Insbesondere bei der für Rosengehölze üblichen Blütenanordnung ist hierdurch ein Entfernen und/oder Beschädigen von einzelnen Blüten möglich. Dies steht im Gegensatz zu der gleichzeitigen Beschädigung bzw. Entfernung mehrerer dicht aneinander stehender Blüten bzw. Fruchtansätze durch vorwiegend in horizontaler Richtung bewegliche Schlagelemente, wie sie aus dem Stand der Technik bekannt sind. Die Konkurrenz zwischen mehren Fruchtansätzen in unmittelbarer Nachbarschaft wird durch die Entfernung einzelner Blüten minimiert. Bei praktischen Versuchen führt dies zu signifikant größeren Früchten bei gleichem Baumertrag. Gleichzeitig wird der Holz- und Blattanteil des Fruchtgehölzes geschont, da er durch die Schlagelemente kaum berührt wird.

Die drehbaren Körper werden vorzugsweise durch ein Antriebselement, insbesondere einen Motor, bspw. über einen Hydraulikmotor, in Rotation versetzt. Dieser kann bspw. an einem Endabschnitt der drehbaren Körper angeordnet sein. Je nach Drehgeschwindigkeit kann die Stärke der Schlagbewegung der Schlagelemente variiert werden. Weiterhin ist die Drehrichtung vorzugsweise variabel.

Gemäß einer besonders bevorzugten Ausführungsform der Erfindung sind die wenigstens zwei um eine Längsachse drehbaren Körper über jeweils einen Tragarm an der Hauptachse angeordnet. Der Tragarm kann hierbei verschwenkbar oder nicht verschwenkbar an der Hauptachse angeordnet sein. Eine Schwenkbarkeit kann hierbei sowohl in vertikaler als auch in horizontaler Richtung vorgesehen sein, das heißt, es kann eine Veränderung des Anstellwinkels zur Hauptachse (Neigung gegenüber der Hauptachse) und/oder ein Verschwenken in einer horizontalen Ebene um die Hauptachse vorgesehen sein. Letztere kann bspw. durch eine Drehbarkeit um die Hauptachse ermöglicht sein. Ein Verschwenken mit Hilfe einer Gelenkanordnung ist jedoch ebenso möglich.

An einem anderen Abschnitt des Tragarmes ist vorzugsweise verschwenkbar der drehbare Körper angeordnet. Die Schwenkbarkeit ist erfindungsgemäß insbesondere in vertikaler Richtung vorgesehen. Eine Schwenkbarkeit in horizontaler Richtung ist jedoch ebenso denkbar.

Der Tragarm wirkt als Abstandhalter zwischen Hauptachse und drehbarem Körper. Sowohl der drehbare Körper als auch die daran befestigten Schlagelemente und eventuell vorhandene Antriebselemente gewinnen hierdurch Raum. Der Tragarm ist vorzugsweise längenverstellbar. Bspw. kann der Tragarm teleskopartig aufgebaut sein. Alternativ kann der Tragarm in seiner Längsrichtung verschiebbar an einer Befestigungsstruktur an der Hauptachse angeordnet sein, so dass die Länge des zwischen Hauptachse und drehbarem Körper liegenden Abschnittes des Tragarmes veränderlich ist. Der Tragarm kann weiterhin höhenverstellbar, das heißt nach oben und unten verschiebbar und in verschiedenen Positionen feststellbar, an der Hauptachse angeordnet sein.

Der bewegliche Tragarm sorgt für eine erhöhte Beweglichkeit und Flexibilität der Vorrichtung. Insbesondere bei einer festen Montage der Hauptachse auf einem Gestell bzw. einem Traktor bietet der verstellbare Tragarm eine Möglichkeit zur individuell optimalen Einstellung des drehbaren Körpers und somit der Schlagelemente. Hierdurch ist dafür gesorgt, dass eine Fruchtbehangsregulierung in allen Bereichen eines Fruchtgehölzes und auch an unterschiedlichen Wuchsformen von Fruchtgehölzen ermöglicht ist. Insbesondere ist ein Entfernen bzw. Beschädigen von Blüten bzw. Fruchtständen im Inneren der Baumkrone möglich, da der wenigstens eine drehbare Körper bis an den Haupttrieb (Stamm) in die Baumkrone hineinreichen kann. Dies ist besonders gewünscht, da diese Früchte qualitativ nicht so hochwertig sind.

Gemäß einer besonders bevorzugten Ausführungsform der Erfindung sind mehrere, jeweils direkt oder über einen Tragarm verschwenkbar an der Hauptachse angeordnete, um ihre Längsachse drehbare Körper übereinander an der Hauptachse angeordnet. Bspw. können an einer Hauptachse drei Tragarme befestigt sein, die jeweils einen um jeweils seine Längsachse drehbaren Körper aufweisen. Jeder dieser drehbaren Körper weist wie bereits beschrieben Schlagelemente auf. Eine Fruchtbehangsregulierung ist hierdurch gleichzeitig in unterschiedlichen Höhen möglich, was insbesondere bei hoch gewachsenen Gehölzen von Vorteil ist.

Gemäß einer weiteren Ausführungsform sind die Aufhängungen der Tragarme und/oder der drehbaren Körper selbst weiterhin um die Hauptachse drehbar. Dadurch können sie so verstellt werden, dass nicht nur Anordnungen der Tragarme genau übereinander, sondern auch versetzt zueinander einstellbar sind. In einer Draufsicht von oben können die drehbaren Körper auf diese Weise in eine nicht-parallele, bspw. V-förmige Stellung zueinander gebracht werden.

Die Abstände zwischen den drehbaren Körpern bzw. zwischen den Tragarmen an der Hauptachse der erfindungsgemäßen Hauptachse, das heißt ihre Höhen über dem Boden, sind vorzugsweise verstellbar, so dass eine individuelle Anpassung an unterschiedliche Gehölze und Wuchsformen erfolgen kann.

Die übereinander an der Hauptachse angeordneten drehbaren Körper können unterschiedliche Längen aufweisen. Auch können die drehbaren Körper selbst längenverstellbar sein, bspw. mittels Teleskopanordnung, oder sie können verschiebbar in einer Befestigungsanordnung angeordnet sein, so dass sie ein- und ausgefahren werden können.

Die Bewegungen und/oder Einstellungen der übereinander bzw. versetzt zueinander an der Hauptachse angeordneten drehbaren Körper bzw. der Tragarme sind vorzugsweise unabhängig voneinander einstellbar und steuerbar, sie können aber auch miteinander gekoppelt sein. Und zwar können die Bewegungen und/oder Einstellungen mindestens zweier drehbarer Körper bzw. mindestens zweier Tragarme zumindest teilweise voneinander unabhängig sein. Bspw. können zwei oder mehrere übereinander an der Hauptachse angeordnete Tragarme unterschiedlich weit ausgefahren sein, so dass die daran angeordneten drehbaren Körper unterschiedlich weit an das Gehölz heranreichen. Die drehbaren Körper können unterschiedliche Anstellwinkel zur Hauptachse einschließen und somit mit unterschiedlicher Neigung in das Gehölz eingreifen. Sie können zu unterschiedlichen Zeitpunkten und in unterschiedlichen Geschwindigkeiten rotieren, usw.

Alternativ - je nach gewünschtem Verwendungszweck - können die Tragarme bzw. die drehbaren Körper jeweils gleiche Anstellwinkel zur Hauptachse einschließen, sie können in Fahrtrichtung gleich weit geneigt sein, sie können gleichzeitig und mit gleicher Geschwindigkeit drehen, etc.

Die jeweiligen Bewegungen können getrennt voneinander oder gleichzeitig ausgeführt werden. Bspw. kann die Länge eines Tragarmes verstellt werden bzw. dieser ein- oder ausgefahren werden währen sich der daran angeordnete drehbare Körper um seine Längsachse dreht.

Vorzugsweise ist vorgesehen, dass jeder drehbare Körper mittels eines eigenen Motors betrieben ist, und hiermit unabhängige Bewegungen vereinfacht sind.

Die Schwenkanordnungen an den Verbindungsstellen Tragarm-Hauptachse, Tragarm-drehbarer Körper bzw. Hauptachse-drehbarer Körper sind bevorzugt hydraulisch betrieben. Die technische Ausführung dieser Anordnungen ist jedoch nicht Teil der Erfindung und daher nicht Gegenstand der vorliegenden Beschreibung. Schwenk-und Drehverbindungen sowie deren Antriebsarten, auch in Verbindung mit Anbauteilen für Traktoren, sind dem Fachmann hinreichend bekannt. Die genannten Schwenkanordnungen können wahlweise auch anders als hydraulisch betrieben werden, bspw. mittels Elektromotoren o. dgl.

Das wenigstens eine flexible Schlagelement der vorliegenden Erfindung ist bevorzugt aus einem flexiblen, elastischen Kunststoff gefertigt. Insbesondere kann es eine Kunststoffschnur sein, die auf beliebige Weise an dem drehbaren Körper befestigt ist. Bspw. kann die Schnur durch benachbarte Bohrungen in einem Flachstahl geführt sein, und der Flachstahl kann an einer Außenmantelfläche des drehbaren Körpers befestigt, bspw. verschraubt sein. Eine andere Form bzw. Befestigungsweise des Schlagelementes ist jedoch denkbar.

Die an unterschiedlichen drehbaren Körpern angeordneten flexiblen Schlagelemente können unterschiedliche Längen aufweisen. Auch können mehrere an einem drehbaren Körper angeordnete Schlagelemente unterschiedliche Längen aufweisen.

Für eine weitere Verbesserung der individuellen Einstellbarkeit der erfindungsgemäßen Vorrichtung kann auch die Hauptachse selbst Freiheitsgrade aufweisen.

Die Hauptachse ist vorzugsweise an einem Grundgestell angeordnet, wobei sie seitlich verschiebbar an dem Grundgestell angeordnet sein kann. Das Grundgestell kann selbst fahrbar sein. Bevorzugt ist es als Anbaugerät für einen Traktor gestaltet, insbesondere für eine Frontanordnung an dem Traktor, so dass die Wirkungsweise der erfindungsgemäßen Vorrichtung jederzeit von dem Traktorführer beobachtet werden kann.

Die Hauptachse kann um sich selbst drehbar sein. Gemäß einer weiteren Ausführungsform kann die Neigung der Hauptachse verändert werden, insbesondere kann die Hauptachse um 0 bis 45° gegen die Vertikale neigbar sein. Dies ist beispielsweise bei schiefem Baumwuchs vorteilhaft. Weiterhin kann durch diese zusätzliche Regulation der Einstellwinkel zwischen den Schlagelementen und den Ästen noch individueller eingestellt werden, so dass das Gerät noch besser an die Gegebenheiten angepasst werden kann.

Die erfindungsgemäße Vorrichtung kann mit Hilfe der vielseitigen Verstellmöglichkeiten individuell an die Baumform bzw. Kronenform eines Fruchtgehölzes angepasst werden und ist somit für alle in der obstbaulichen Praxis üblichen Kronenformen und Wuchsstärken nutzbar.

Die individuelle Einstellung kann insbesondere durch die Höhe der drehbaren Körper bzw. Tragarme über dem Erdboden, die Neigungswinkel der drehbaren Körper sowie deren Neigungswinkel in Fahrtrichtung verändert werden.

Der Prototyp der erfindungsgemäßen Vorrichtung wurde für Apfelbäume, die zu schlanken Spindeln gezogen sind, entwickelt. Eine Anpassung an andere Baumformen und andere Obstarten, z.B. auch Steinobst (Pflaumen, Kirschen) oder tropische Obstarten (Citrus) ist denkbar.

Die vorliegende Erfindung umfasst weiterhin ein Verfahren zur Regulierung des Fruchtbehangs von Obstbäumen gemäß den Mermalen des Anspruchs 8.

### Figurenbeschreibung

Die Erfindung wird nachfolgend anhand eines bevorzugten Ausführungsbeispiels unter Bezugnahme auf die beiliegenden Zeichnungen näher erläutert. Es zeigen:
- Fig. 1: eine schematische Seitenansicht einer erfindungsgemäßen Vorrichtung zur Regulierung des Fruchtbehangs von Fruchtgehölzen,
- Fig. 2: eine schematische Seitenansicht einer erfindungsgemäßen Vorrichtung zur Regulierung des Fruchtbehangs von Fruchtgehölzen gemäß Fig. 1 mit von den in Fig. 1 dargestellten Einstellungen abweichenden Einstellungen,
- Fig. 3a/b: jeweils eine Ansicht einer erfindungsgemäßen Vorrichtung als Anbauteil für eine landwirtschaftliche Zugmaschine, und
- Fig. 4: eine Detailansicht eines um seine Längsachse drehbaren Körpers und den daran befestigten Schlagelementen.

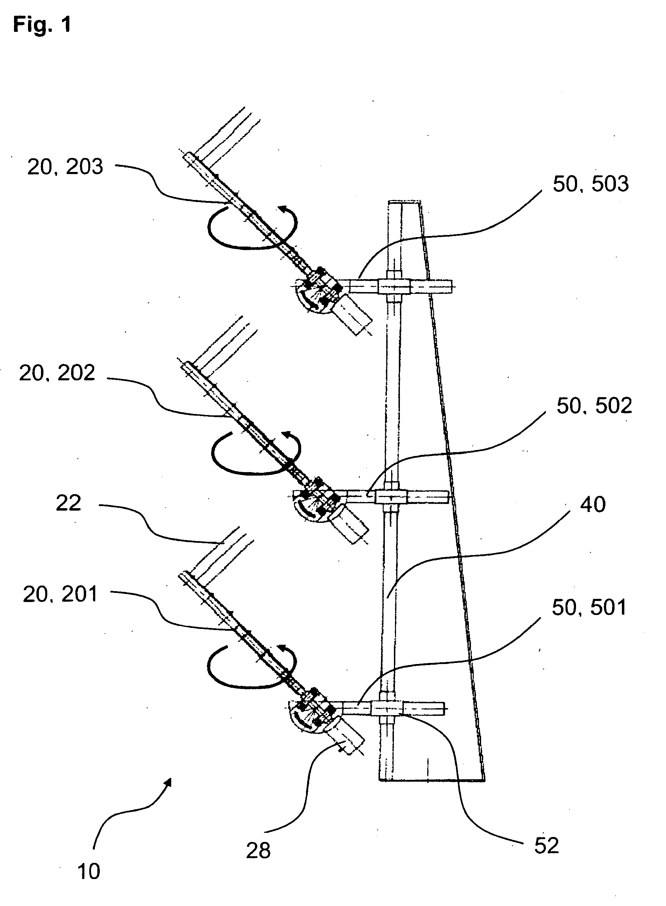

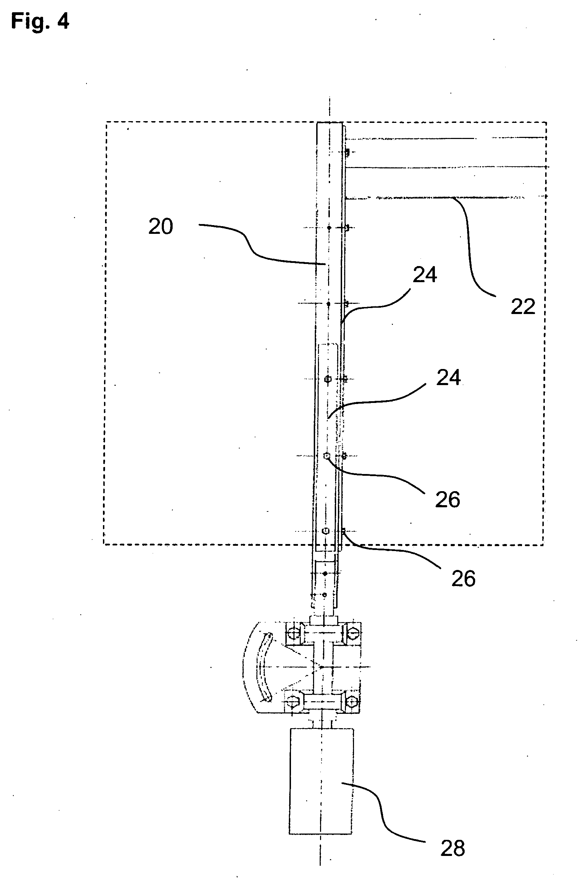

Fig. 1 zeigt schematisch den Aufbau einer Ausführungsform einer erfindungsgemäßen Vorrichtung zur Regulierung des Fruchtbehangs von Fruchtgehölzen 10. Die Vorrichtung 10 wirkt durch mechanisches Entfernen oder Beschädigen von einzelnen Blüten und/oder Fruchtständen in allen Bereichen von Fruchtgehölzen, insbesondere von Obstbäumen. In der dargestellten Ausführungsform umfasst die Vorrichtung 10 eine Hauptachse 40 und drei Tragarme 50. Die Hauptachse 40 ist ein Vierkantstahl, welcher auf einem Gestell montiert ist, das als Anbaugerät für einen Traktor ausgebildet ist. An jedem Tragarm 40 ist jeweils ein langgestreckter Körper 20 angeordnet, der um seine Längsachse drehbar ist. Die dargestellte Vorrichtung weist somit drei übereinander an der Hauptachse 40 angeordnete, langgestreckte und jeweils im ihre Längsachse drehbare Körper 201, 202, 203 auf. Die Rotationsbewegung der drehbaren Körper 20 wird durch jeweils an ihrem Endabschnitt angeordnete Hydraulikmotoren 28 erzeugt. Von den Mantelflächen der um ihre Längsachse drehbaren Körper 20 gehen jeweils mehrere Schlagelemente 22 aus. Die Schlagelemente 22 sind vorzugsweise Kunststoffschnüre, die bei Rotation des drehbaren Körpers, an dem sie befestigt sind, durch die hierbei entstehende Zentrifugalkraft in eine weitgehend radial von dem Körper 20 abstehende Stellung gebracht werden. Der genaue Aufbau eines erfindungsgemäß gestalteten drehbaren Körpers 20 ergibt sich aus Fig. 4 und der zugehörigen, unten folgenden Beschreibung.

Erfindungsgemäß sind die drehbaren Körper 20 gegenüber der Hauptachse 40 unabhängig voneinander verschwenkbar. Hierbei ist eine Schwenkbarkeit in vertikaler und in horizontaler Richtung vorgesehen. Grundsätzlich kann sich die Schwenkbarkeit aus einer Schwenkbarkeit der drehbaren Körper 20 an ihrem Ansatzpunkt am Tragarm 50 ergeben. Alternativ ist auch eine Schwenkbarkeit im Bereich des Ansatzpunktes des Tragarmes 50 an der Hauptachse 40 denkbar. In der dargestellten Ausführungsform sind die drehbaren Körper 20 im Bereich ihres Ansatzpunktes am Tragarm 50 sowohl in vertikaler als auch in horizontaler Richtung verschwenkbar und zusätzlich im Bereich des Ansatzpunktes des Tragarmes 50 an der Hauptachse 40 in horizontaler Richtung verschwenkbar.

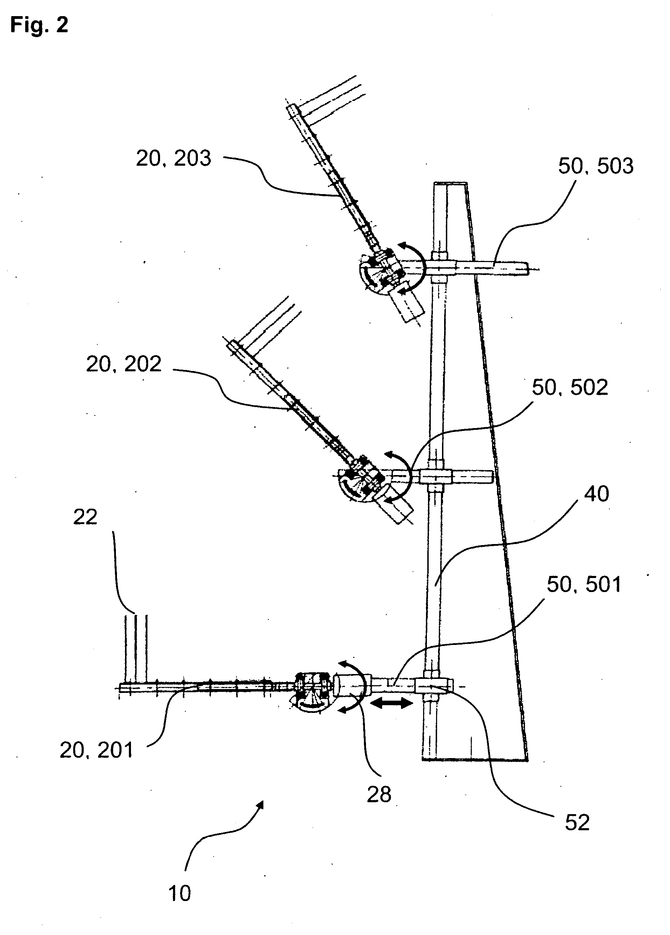

Der Anstellwinkel eines drehbaren Körpers 20 zur Hauptachse 40 ist vorzugsweise zwischen 90 und 30° verstellbar. Bei einem Anstellwinkel von 90° zur Hauptachse 40 weist der drehbare Körper 20 einen Winkel von etwa 0° zur Horizontale auf, bei einem Anstellwinkel von 30° zur Hauptachse 40 beträgt der Winkel zur Horizontale etwa 60°. In Fig. 1 befinden sich alle drehbaren Körper 20 in einer Winkelstellung von etwa 45° zur Hauptachse 40. Fig. 2 zeigt die Variabilität der Anstellwinkel und die unabhängig Einstellung derselben: Der unterste Körper 201 weist einen Anstellwinkel von etwa 90° zur Hauptachse 40 auf und befindet sich somit in weitgehend horizontaler Stellung; der mittlere Körper 202 weist einen Anstellwinkel von etwa 45° zur Hauptachse 40 auf; und der oberste Körper 203 weist einen Anstellwinkel von etwa 30° zur Hauptachse 40 auf. Die unterschiedlichen Anstellwinkel der gezeigten drehbaren Körper 201, 202 und 203 sind hierbei so gewählt, dass sich die Eingreifbereiche der drei Körper 201, 202 und 203 nicht überschneiden.

Je nach gewähltem Anstellwinkel kann ein drehbarer Körper 20 unterschiedlich in ein Fruchtgehölz eingreifen. Der Anstellwinkel kann so angepasst werden, dass der langgestreckte Körper 20 möglichst weit ins Innere eines Fruchtgehölzes eingreifen kann, um für eine Entfernung der innen liegenden Blüten bzw. Fruchtstände zu sorgen, und gleichzeitig das Ast- und Blattwerk möglichst wenig zu beschädigen. Die von dem langgestreckten Körper 20 während seiner Rotation um seine Längsachse weitgehend radial abstehenden Schlagelemente 22 ändern ihre Schlagrichtung ebenfalls mit dem Neigungswinkel des Körpers 20. Bei einer horizontalen Stellung des Körpers 20, wie bspw. des Körpers 201 in Fig. 2, schlagen die Schlagelemente 22 in vertikaler Richtung, das heißt vorwiegend von oben bzw. unten kommend an die Äste und Zweige des Fruchtgehölzes, wenn der Körper 20 von der Seite her an das Gehölz heran geführt ist. Auf diese Weise können einzelne Blüten bzw. Fruchtstände beschädigt oder entfernt werden. Eine Neigung der Schlagebene bis zu einer Winkelstellung von etwa 30° zur Horizontale als Folge einer Schwenkbewegung des drehbaren Körpers 20 zu einem Anstellwinkel von 30° zur Hauptachse 40 (siehe Körper 203 in Fig. 2) ist erfindungsgemäß möglich und sinnvoll, da in diesem Winkelbereich ein optimaler Ausgleich zwischen schonendem Eingreifen des Körpers 20 in das Gehölz und dem möglichst schonendem Abschlagen bzw. Beschädigen der Blüten bzw. Fruchtstände durch die Schlagelemente 22 gegeben ist. Bei einer weiteren Neigung der Schlagebene zur Horizontalen hat diese immer mehr schädliche Auswirkungen auf das Gehölz, so dass diese nicht von Vorteil und im Allgemeinen zu vermeiden ist.

Für eine weitere Verbesserung der individuellen Einstellbarkeit der erfindungsgemäßen Vorrichtung sind die Tragarme 50 längenverstellbar bzw. verschiebbar in einer vorzugsweise schwenk- oder drehbaren Befestigungsstruktur 52 an der Hauptachse 40 angeordnet. Durch ein Verschieben des Tragarmes 50 in der Befestigungsstruktur 52 ("Ein- bzw. Ausfahren") kann der Abschnitt des Tragarmes 50, der zwischen der Hauptachse und dem drehbaren Körper 20 liegt, verändert werden. In Fig. 2 ist dies dargestellt: Der unterste drehbare Körper 201 kann maximal weit in das Gehölz hinein ragen, indem er sich einerseits in horizontaler Neigungsstellung befindet und weiterhin der zugehörige Tragarm 501 maximal ausgefahren ist. Der oberste drehbare Körper 203 ist maximal geneigt und der zugehörige Tragarm 503 ist so weit wie möglich eingefahren: Hierdurch verkürzt sich der Abstand zwischen Hauptachse 40 und drehbarem Körper 20, der drehbare Körper 20 kann auf diese Weise zurückgenommen werden bis dahin, dass er an der Fruchtbehangsregulierung nicht mehr mitwirkt.

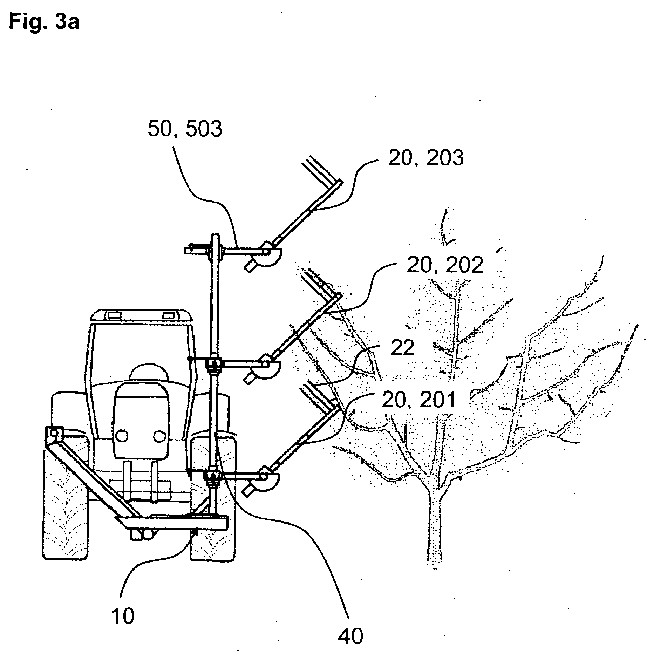

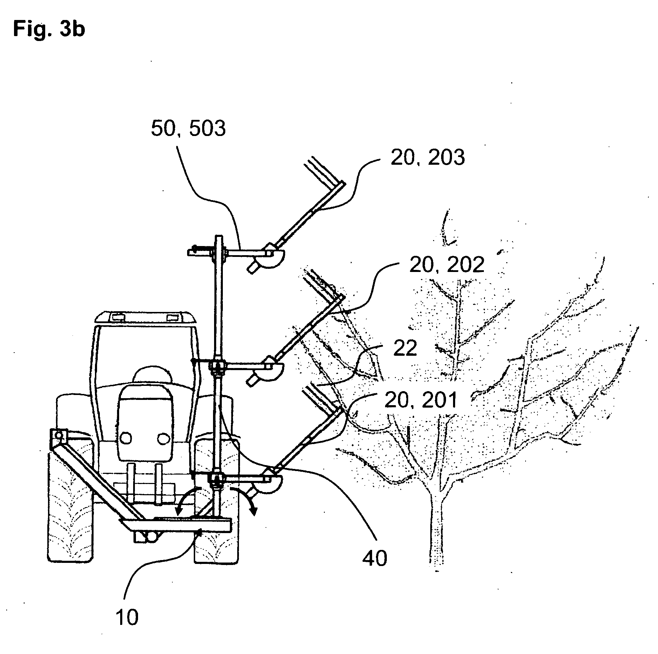

Die Hauptachse kann für die unterschiedlichsten Bewegungsarten (seitliches Bewegen, Drehen, Neigen) über eine beliebige technische Baustruktur an einem Grundgestell befestigt sein. Eine Ausbildung des Grundgestells als Anbauteil, insbesondere ein Frontanbauteil, für einen Traktor ist besonders bevorzugt und ohne weitere Beschreibung in Fig. 3a und 3b angedeutet. In Fig. 3b ist weiterhin die Möglichkeit angedeutet, die Neigung der Hauptachse bezüglich der Vertikalen zu verändern, so dass weitere Einstellmöglichkeiten zur individuellen Anpassung entstehen.

Fig. 4 zeigt einen langgestreckten, um seine Längsachse drehbaren Körper 20 gemäß vorliegender Erfindung im Detail. Der Körper 20 ist bevorzugt ein Vierkantstahl, kann jedoch auch bspw. ein Mehrkant- oder Rundstahl sein. An einem Endabschnitt des Körpers 20 ist ein Hydraulikmotor 28 angeordnet, der über eine Wellenverbindung für eine Rotationsbewegung des Körpers 20 sorgen kann. An den Außenmantelflächen des Körpers sind Schlagelemente 22 angeordnet. Diese sind Kunststoffschnüre, im Ausführungsbeispiel mit etwa 2 mm Durchmesser und ca. 700 mm lang, die durch zwei benachbarte Bohrungen in einem Flachstahl 24 geführt sind. Der Flachstahl 24 ist mittels Schrauben 26 an dem Körper 20 befestigt. Ein einzelnes Schlagelement 22 ist somit etwa 350 mm lang. Eine Vielzahl derartiger Flachstahl-Kunststoffschnur-Anordnungen sind vorzugsweise und entgegen der Darstellung am gesamten Umfang des Körpers 20 angeordnet.

Auf die Beschreibung von technischen Einzelheiten, insbesondere die Bauweise der Schwenkanordnungen, wurde in der vorliegenden Beschreibung verzichtet, da diese im Bereich der Kenntnis des mit der vorliegenden Technik befassten Fachmannes liegen.

### Bezugszeichenliste

- 10: Vorrichtung zur Fruchtbehangsregulierung
- 20: langgestreckter, um seine Längsachse drehbarer Körper
- 22: Schlagelement
- 24: Flachstahl
- 26: Schraube
- 28: Hydraulikmotor
- 40: Hauptachse
- 50: Tragarm
- 52: schwenkbare Befestigungsstruktur

## Patentansprüche

1. Vorrichtung zur Regulierung des Fruchtbehangs von Obstbäumen (10) durch mechanisches Entfernen oder Beschädigen von Blüten und/oder Fruchtständen, umfassend wenigstens zwei um jeweils eine Längsachse drehbare Körper (20), an denen jeweils mehrere, im Betrieb weitgehend radial von dem drehbaren Körper (20) abstehende, flexible Schlagelemente (22) in Form von Kunststoffschlegeln und/oder Kunststoffschnüren angeordnet sind, wobei die wenigstens zwei drehbaren Körper (20) bezüglich ihrer Längsachsen unabhängig voneinander verschwenkbar angeordnet sind,
- wobei die Anstellwinkel der wenigstens zwei um jeweils eine Längsachse drehbaren Körper (20) zu einer vertikalen oder gegenüber der Vertikalen geneigten Hauptachse (40), an der die drehbaren Körper (20) über jeweils einen Tragarm (50) angeordnet sind, zwischen 90° und 30° verstellbar sind,
- wobei jeder Tragarm (50) längenverstellbar und/oder aus- und einfahrbar und/oder an bzw. gegenüber der Hauptachse (40) verschwenkbar ist,
- und wobei die mindestens zwei, jeweils über einen Tragarm (50) verschwenkbar an der Hauptachse (40) angeordneten, um ihre Längsachse drehbaren Körper (20) übereinander an der Hauptachse (40) und/oder höhenverstellbar an der Hauptachse (40) angeordnet sind.

2. Vorrichtung nach Anspruch 1, bei der die vertikale Hauptachse (40) drehbar und/oder zwischen -45°bis 45°gegen die Vertikale neigbar und/oder seitlich verschiebbar an einem fahrbaren Grundgestell angeordnet ist.

3. Vorrichtung nach Anspruch 1 oder 2, bei der die drehbaren Körper (20) jeweils eine Vielzahl von im Betrieb weitgehend radial abstehenden flexiblen Schlagelementen in Form von Kunststoffschlegeln und/oder Kunststoffschnüren aufweisen.

4. Vorrichtung nach Anspruch 3, bei der die an unterschiedlichen drehbaren Körpern (20) angeordneten flexiblen Schlagelemente und/oder mehrere an einem drehbaren Körper (20) angeordnete flexible Schlagelemente unterschiedliche Längen aufweisen.

5. Vorrichtung nach einem der Ansprüche 1 bis 4, bei der die wenigstens zwei drehbaren Körper (20) unterschiedliche Längen aufweisen und/oder längenverstellbar sind.

6. Vorrichtung nach Anspruch 1, bei der die Hauptachse (40) seitlich verschiebbar an einem fahrbaren Grundgestell angeordnet ist.

7. Vorrichtung nach Anspruch 6, bei der das Grundgestell ein Anbaugerät eines Traktors ist, insbesondere für eine Frontanordnung.

8. Verfahren zur Regulierung des Fruchtbehangs von Obstbäumen (10) durch mechanisches Entfernen oder Beschädigen von Blüten und/oder Fruchtständen mittels wenigstens zweier um jeweils eine Längsachse drehbare Körper (20), an denen jeweils mehrere, im Betrieb weitgehend radial von dem drehbaren Körper (20) abstehende, flexible Schlagelemente (22) in Form von Kunststoffschlegeln und/oder Kunststoffschnüren angeordnet sind, wobei die wenigstens zwei drehbaren Körper (20) bezüglich ihrer Längsachsen unabhängig voneinander verschwenkbar angeordnet sind,
- wobei die Anstellwinkel der wenigstens zwei um jeweils eine Längsachse drehbaren Körper (20) zu einer vertikalen oder gegenüber der Vertikalen geneigten Hauptachse (40), an der die drehbaren Körper (20) über jeweils einen Tragarm (50) angeordnet sind, zwischen 90° und 30° verstellbar sind,
- wobei jeder Tragarm (50) längenverstellbar und/oder aus- und einfahrbar und/oder an bzw. gegenüber der Hauptachse (40) verschwenkbar ist,
- und wobei die mindestens zwei, jeweils über einen Tragarm (50) verschwenkbar an der Hauptachse (40) angeordneten, um ihre Längsachse drehbaren Körper (20) übereinander an der Hauptachse (40) und/oder höhenverstellbar an der Hauptachse (40) angeordnet sind.

9. Verfahren nach Anspruch 8, bei dem die Hauptachse (40), an der die um ihre Längsachsen drehbaren Körper (20) übereinander angeordnet sind, durch Drehung und/oder durch Neigung um 0° bis 45° in der Vertikalen und/oder durch seitliche Verschiebung an einem fahrbaren Grundgestell individuell eingestellt wird.

10. Verfahren nach Anspruch 8 oder 9, bei dem die drehbaren Körper (20) über einen Motor als Antriebselement, insbesondere über einen Hydraulikmotor in Rotation versetzt werden.

11. Verfahren nach Anspruch 10, bei dem jeder drehbare Körper (20) mittels eines eigenen Motors betrieben wird.

## Claims

1. Device for controlling fruition intensity on fruit trees (10) by mechanical removal of, or damage to, blossoms and/or infructescences, with said device comprising two or more bodies (20), each rotatable around a longitudinal axis and each equipped with several flexible striking elements (22), formed of plastic mallets and/or plastic cords arranged on each of said bodies (20), whereby the striking elements (22) protrude largely radially during operation from said rotatable bodies (20), and whereby the at least two rotatable bodies (20) are arranged in such a way that they can be swiveled independently of each other in respect to their longitudinal axes,
- whereby each of the at least two bodies (20), each rotatable around a longitudinal axis, are arranged by means of a support arm (50) on a main axis (40), which is either vertical or inclined relative to the vertical, and whereby the angle of attack between the at least two bodies (20) and the main axis (40) is adjustable to angle settings between 90°and 30°,
- whereby each of the support arms (50) is length adjustable and/or extendable and retractable and/or can be swiveled on or relative to the main axis (40),
- and whereby the at least two bodies (20), each rotatable around their longitudinal axis and each attached for swivel movement by means of a support arm (50) on a main axis (40), are arranged one above the other and/or height adjustably on the main axis (40).

2. Device according to claim 1, wherein the vertical main axis (40) is rotatable and/or inclinable between -45° to 45° relative to the vertical and/or arranged on a mobile base frame in such a way that it is laterally slidable.

3. Device according to claim 1 or 2, wherein the rotatable bodies (20) each comprise a multitude of flexible striking elements that are formed of plastic mallets and/or plastic cords and protrude largely radially during operation from the rotatable bodies.

4. Device according to claim 3, wherein the flexible striking elements attached to different rotatable bodies (20) and/or each of the number of striking elements attached to one rotatable body (20) have different lengths.

5. Device according to one of the claims 1 to 4, wherein the at least two rotatable bodies (20) have different lengths and/or are length adjustable.

6. Device according to claim 1, wherein the main axis (40) is arranged on a mobile base frame in such a way that it is laterally slidable.

7. Device according to claim 6, wherein the base frame represents a tractor attachment, in particular one suited for front mounting.

8. Method for controlling fruition intensity on fruit trees (10) by mechanical removal of, or damage to, blossoms and/or infructescences, by means of two or more bodies (20), each rotatable around a longitudinal axis and each equipped with several flexible striking elements (22), formed as plastic mallets and/or plastic cords arranged on each of said bodies (20), whereby the striking elements (22) protrude largely radially during operation from said rotatable bodies (20), and whereby the at least two rotatable bodies (20) are arranged in such a way that they can swivel independently of each other in respect to their longitudinal axes,
- whereby each of the at least two bodies (20), each rotatable around a longitudinal axis, are arranged by means of a support arm (50) on a main axis (40), which is either vertical or inclined relative to the vertical, and whereby the angle of attack between the at least two bodies (20) and the main axis (40) is adjustable to angle settings between 90°and 30 °,
- whereby each of the support arms (50) is length adjustable and/or extendable and retractable and/or can be swiveled on or relative to the main axis (40),
- and whereby the at least two bodies (20), each rotatable around their longitudinal axis and each attached for swivel movement by means of a support arm (50) on a main axis (40), are arranged one above the other and/or height adjustably on the main axis (40).

9. Method according to claim 8, wherein the bodies (20) that are rotatable around their longitudinal axis are arranged above one another on the main axis (40), with the main axis (40) being individually adjustable by rotation and/or vertical inclination between 0° and 45° and/or lateral sliding along a mobile base frame.

10. Method according to claim 8 or 9, wherein the rotatable bodies (20) are caused to rotate by means of a motor as drive element, in particular by means of a hydraulic motor.

11. Method according to claim 10, wherein each of the rotatable bodies (20) is driven by an individual motor.

## Revendications

1. Dispositif de régulation de la charge en fruits d'arbres fruitiers (10) par élimination mécanique ou endommagement de fleurs et/ou de régimes, comprenant au moins deux corps (20) respectivement rotatifs autour d'un axe longitudinal, sur lesquels sont disposés chaque fois plusieurs éléments de choc flexibles (22) débordant en cours de fonctionnement en grande partie radialement du corps rotatif (20), éléments de choc sous forme de battoirs en plastique et/ou de cordons en plastique, étant donné que les au moins deux corps rotatif (20) sont disposés de manière à pivoter indépendamment l'un de l'autre par rapport à leurs axes longitudinaux,
- étant donné que les angles d'incidence des au moins deux corps (20) rotatifs chacun autour d'un axe longitudinal peuvent être réglés entre 90° et 30° par rapport à un axe principal (40) vertical ou incliné par rapport à la verticale, axe principal sur lequel les corps rotatifs (20) sont disposés par l'intermédiaire chacun d'un bras porteur (50),
- étant donné que chaque bras porteur (50) est réglable en longueur et/ou escamoté et rétracté et/ou peut pivoter sur ou vis-à-vis de l'axe principal (40),
- et étant donné que les au moins deux corps (20) respectivement rotatifs autour de leurs axes longitudinaux, disposés chacun par l'intermédiaire d'un bras porteur sur l'axe principal (50), sont disposés l'un au-dessus de l'autre sur l'axe principal (40) et/ou à hauteur réglable sur l'axe principal (40).

2. Dispositif selon la revendication 1, dans lequel l'axe principal (40) vertical est rotatif et/ou inclinable d'une valeur de -45° à 45° par rapport à la verticale et/ou disposé de manière latéralement décalable sur un châssis de base mobile.

3. Dispositif selon la revendication 1 ou 2, dans lequel les corps rotatifs (20) présentent respectivement une pluralité d'éléments de choc flexibles, débordant en grande partie radialement en cours de fonctionnement, disponibles sous forme de battoirs en plastique et/ou cordons en plastique.

4. Dispositif selon la revendication 3, dans lequel les éléments de choc flexibles disposés sur différents corps rotatifs (20) et/ou plusieurs éléments de choc flexibles disposés sur un corps rotatif (20) présentent des longueurs différentes.

5. Dispositif selon l'une quelconque des revendications 1 à 4, dans lequel les au moins deux corps rotatifs (20) présentent des longueurs différentes et/ou sont réglables en longueur.

6. Dispositif selon la revendication 1, dans lequel l'axe principal (40) est disposé de manière latéralement décalable sur un châssis de base mobile.

7. Dispositif selon la revendication 6, dans lequel le châssis de base est un appareil rapporté d'un tracteur, en particulier pour un arrangement à l'avant.

8. Procédé de régulation de la charge en fruits d'arbres fruitiers (10) par élimination mécanique ou endommagement de fleurs et/ou de régimes au moyen d'au moins deux corps (20) respectivement rotatifs autour d'un axe longitudinal, sur lesquels sont disposés chaque fois plusieurs éléments de choc flexibles (22) débordant en cours de fonctionnement en grande partie radialement du corps rotatif (20), éléments de choc sous forme de battoirs en plastique et/ou de cordons en plastique, étant donné que les au moins deux corps rotatif (20) sont disposés de manière à pivoter indépendamment l'un de l'autre par rapport à leurs axes longitudinaux,
- étant donné que les angles d'incidence des au moins deux corps (20) rotatifs chacun autour d'un axe longitudinal peuvent être réglés entre 90° et 30° par rapport à un axe principal (40) vertical ou incliné par rapport à la verticale, axe principal sur lequel les corps rotatifs (20) sont disposés par l'intermédiaire chacun d'un bras porteur (50),
- étant donné que chaque bras porteur (50) est réglable en longueur et/ou escamoté et rétracté et/ou peut pivoter sur ou vis-à-vis de l'axe principal (40),
- et étant donné que les au moins deux corps (20) respectivement rotatifs autour de leurs axes longitudinaux, disposés chacun par l'intermédiaire d'un bras porteur sur l'axe principal (50), sont disposés l'un au-dessus de l'autre sur l'axe principal (40) et/ou à hauteur réglable sur l'axe principal (40).

9. Procédé selon la revendication 8, dans lequel l'axe principal (40) sur lequel sont disposés l'un au dessus de l'autre les corps (20) rotatifs autour de leurs axes longitudinaux peut être réglé individuellement par rotation et/ou inclinaison de 0° à 45° par rapport à la verticale et/ou par déplacement latéral sur un châssis de base mobile.

10. Procédé selon la revendication 8 ou 9, dans lequel les corps rotatifs (20) sont mis en rotation par l'intermédiaire d'un moteur comme élément d'entraînement, en particulier par l'intermédiaire d'un moteur hydraulique.

11. Procédé selon la revendication 10, dans lequel chaque corps rotatif (20) est exploité au moyen de son propre moteur.
